# EUROPEAN PATENT SPECIFICATION

(11) **EP 1 619 706 B1**
(45) Date of publication and mention of the grant of the patent: **09.09.2009**
(21) Application number: 04017259.5
(22) Date of filing: 22.07.2004
(51) Int. Cl.: H01H 25/06, H01H 25/00

(54) **Controller device and car multimedia device**
Bedienungseinrichtung und Fahrzeugmultimediavorrichtung
Dispositif de commande et dispositif multimedia automobile

(43) Date of publication of application: 25.01.2006
(73) Proprietor: Harman Becker Automotive Systems GmbH, 76307 Karlsbad (DE)
(72) Inventor: Behrens, Ralph, 31174 Schellerten (DE)
(74) Representative: Bertsch, Florian Oliver

(56) References cited:
- EP-A- 1 205 956
- US-A- 4 306 131
- US-A1- 2004 032 395

## Description

The present invention relates to a controller device for controlling an electronic system, particularly a car multimedia system, comprising a rotary-push-button switch, and a frame for supporting said switch.

Such controller devices are generally known. They are for example used to control audio components in a vehicle. Particularly, rotary-push-button switches are employed for controlling the volume of an audio component by rotating the switch and to switch on and off the component by pushing the switch.

Recently, so-called multimedia systems for vehicles are becoming more and more popular. In addition to the audio components, a multimedia system offers several new services, like Internet browsing, E-mail services, navigation services, etc.

Due to the increased number of offered functions and services, the handling of such a system also becomes more complex particularly with respect to reading of information and selecting of services and functions. In order to allow the selection and activation of functions and services, presently available multimedia systems for vehicles comprise a second rotary-push-button switch. By rotating this switch, the user may move a cursor-like mark on a display of the system from one selection item to another. The activation of a respective selection item may be accomplished by pushing the switch.

US 2004/0032395 A1 discloses a controller device according to the preamble of claim 4.

Although such car multimedia systems operate well, there is a demand for a system with improved ergonomics.

Therefore, one of the objects of the present invention is to provide a controller device as mentioned above and a car multimedia device both having improved ergonomics.

This object is solved by the above-mentioned controller device, the rotary-push-button switch of which is slideably arranged at said frame between a first and a second position, and wherein a position detecting element for detecting said position of said rotary-push-button switch is provided, wherein dependent on the position said rotary-push-button switch is operated in a first mode or a second mode.

According to the invention, four push-switches are equally arranged around said rotary-push-button switch.

This measure has the advantage that the flexibility of the controller device, particularly the possibility of generating different control signals, may be increased.

According to the invention, a supporting plate adapted to support said rotary-push-button switch and said four further switches, and to engage with said frame for said sliding movement is provided.

That is, the rotary-push-button switch as well as the four switches around the rotary-push-button switch are supported by a separate supporting plate which in turn engages with said frame for holding the unit and for allowing the sliding movement. Hence, the supporting plate is moved together with the rotary-push-button switch between the first and the second position.

The advantage of this measure is that a very solid and reliably controller unit may be achieved.

That is in other words, said rotary-push-button switch may be moved in a plane perpendicular to the rotation axis of the rotary-push-button switch between a first position and a second position. The position detecting element allows to detect the position of the rotary-push-button switch and in response thereto allows to activate a first mode or a second mode. In the first mode, for example, the rotary-push-button switch allows to control the volume of the respective car multimedia system employing the controller device. In the second mode, for example, the same rotary-push-button switch may be used for selecting and activating functions and services, like Internet, E-mail, navigation, etc.

Hence, the inventive controller device allows to eliminate one rotary-push-button switch of the present car multimedia systems and hence to use only one rotary-push-button switch instead of two. This reduction of controller elements, however, does not result in a more complex handling of the system. In contrary, the handling is improved since the user is not forced to change between the first rotary-push-button switch and the second.

Therefore, improved ergonomics may be achieved by the inventive controller device.

In a preferred embodiment, a locking means for releasibly holding said rotary-push-button switch in said first and said second position is provided.

This measure has the advantage that the rotary-push-button switch is held in the respective position avoiding an unintended movement of the switch out of the desired position.

Further, the locking means haptically indicates to the user, for example by a click, that one of both positions is reached.

In a further preferred embodiment, a transmitter for transmitting control signals generated by said switches and/or said position detecting element is provided. More preferably, said transmitter comprises a wireless transmitter element for transmitting said signals wireless. That is in other words, the controller device may transmit control signals to a respective electronic system, particularly a car multimedia system, without having to install cables, wires, etc. between the controller device and the electronic system.

This increases the flexibility and the range of applications of the controller device significantly. Preferably, the wireless transmitter element comprises a bluetooth element allowing to use the standard bluetooth protocol for transmitting and receiving signals wireless. The use of the standard bluetooth protocol for data transmission is advantageous also in terms of costs since standard off-the-shelf components may be employed.

However, the inventive controller device is not limited to a wireless transmission of data. Of course, it would also be possible to transmit the respective control signals via cables, wires etc. between the electronic system and the controller device.

In a preferred embodiment, the frame comprises at least one, preferably two, parallel and elongated holes for guiding and limiting the sliding movement of the rotary-push-button switch (and optionally said four push-switches) between said first and second positions.

That is in other words, the rotary-push-button switch engages, e.g. via two pins, with elongated holes. First, the elongated holes serve as stop members as to limit the sliding movement of the rotary-push-button switch. Second, the elongated holes guide the rotary-push-button switch and ensure that it is moved on a predetermined path.

The advantage of this measure is that the constructional design is less complex and hence less expensive than other possible constructions for allowing the sliding movement of the rotary-push-button switch.

In a further preferred embodiment, a light element assigned to the position detecting element and adapted to signalize the position of said rotary-push-button switch optically, preferably by differently colored light is provided.

That is, the light source emits light in a first color or a second different color depending on the set position of the rotary-push-button switch. For example, the light source emits red light when the switch is in the first position, and green light when the switch is in the second position. The light source itself may be positioned such that it is in the direct field of view of the user, or preferably within the controller device arranged to emit light through gaps between the rotary-push-button switch and the elements around it. In the latter case, the light source operates like an indirect lighting.

The advantage of this measure may be seen in improved ergonomics.

The object of the present invention may also be solved by a car multimedia device comprising a front panel adapted to be placed at the dashboard, and a display supported by the front panel, and being characterized by the inventive controller device.

That is in other words, that the above-mentioned inventive controller device is used as a component of a car multimedia device. The inventive controller device allows to eliminate the two rotary-push-button switches used in the prior art and instead allows to use one rotary-push-button switch which may be operated in two different modes by moving it from a first to a second position and vice versa.

Hence, the ergonomics of the car multimedia device may be improved by using just one rotary-push-button switch instead of two. Further, the display of the car multimedia device may be increased in size so that more information may be displayed thereon.

In a preferred embodiment, said controller device is placed remote of the front panel and the display.

That is in other words, the controller device is for example placed anywhere in the middle and horizontal part of the dashboard (between the two front seats), whereas the display may be placed at the typical standardized location (installation slot) destined for audio components in the dashboard.

The advantage of this measure is that the size of the display may further be increased since the controller device has not to be arranged within the area of the front panel of the car multimedia device.

Further features and advantages can be taken from the following description and the enclosed drawings.

It is to be understood that the features mentioned above and those yet to be explained below can be used not only in the respective combinations indicated, but also in other combinations or in isolation, without leaving the scope of the present invention.

An embodiment of the invention is shown in the drawings and will be explained in more detail in the description below with reference to same. In the drawings:
- Fig. 1: schematically shows a car multimedia system with a controller device according to the present invention;
- Figs. 2a, b: are sectional side views of the controller device of the present invention; and
- Figs. 3a, b: are schematic top views of the inventive controller device in two different positions.

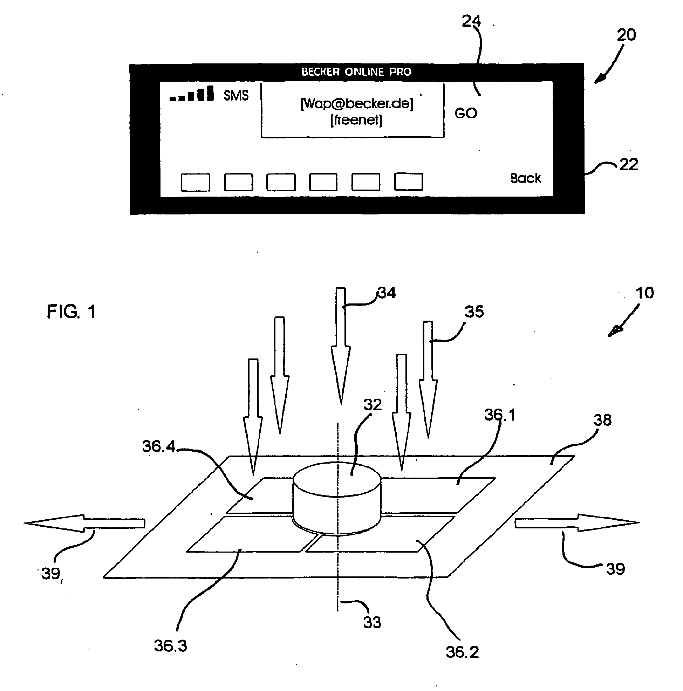

In Fig. 1, a car multimedia system is schematically shown and referenced with reference numeral 10. It is to be noted that Fig. 1 shows only these parts of the car multimedia system which are necessary for describing the present invention.

Generally, a car multimedia system comprises a plurality of components or units necessary to offer the user a plurality of functions and services. For example, the car multimedia system comprises a radio tuner unit for playing radio stations; a navigation unit for offering route guidance; a CD- and DVD-player for playing music or video disks; a GSM mobile unit for allowing telephone calls; or an Internet unit for offering a plurality of Internet services, like E-mail, etc. It is to be noted that this enumeration is not complete and, hence, further units offering other functions or services may be provided.

The car multimedia system 10 comprises a front panel unit 20 comprising a front panel 22 and a display 24 integrated into the front panel. In the present embodiment, the size of the front panel is adapted to the size of the receiving opening of the DIN ISO installation slot in the dashboard of a car.

The size of the display is respectively adapted to the size of the front panel, wherein substantially the whole area of the front panel is occupied by the display. The display 22 is preferably provided as a dot matrix display.

On the display 24, information, like selectable menu items may be displayed. The menu items are necessary for activating respective functions or services offered by the car multimedia 10. The selection and activation process may be carried out by means of a controller device 30.

The schematically shown controller device 30 is placed within a car remote of the front panel unit 20, and communicates with this unit wirelessly. It is preferred to use the bluetooth protocol as data transmission medium between the controller device 30 and the front panel unit 20.

The controller device 30 comprises a rotary-push-button switch 32, which is briefly referred to as RP-switch in the following. The RP-switch 32 offers two different functions, namely a rotary switch which may be activated by rotating it around a rotation axis 33, and a push switch, which may be activated by pushing it in the direction of the rotation axis 33. An arrow 34 indicates the direction of this pushing movement.

Equally spaced around the RP-switch 32, four push switches 36.1 to 4 are provided. The push switches 36 are placed in one plane being perpendicular to the rotation axis 33. The push switches 36 may be activated by pushing them in a direction parallel to the rotation axis 33 as indicated by arrows 35.

The whole unit consisting of the RP-switch 32 and the four push switches 36 is supported or mounted on a supporting plate 38 which is also perpendicular to the rotation axis 33. Hence, this controller unit offers five push switches and one rotary switch in total.

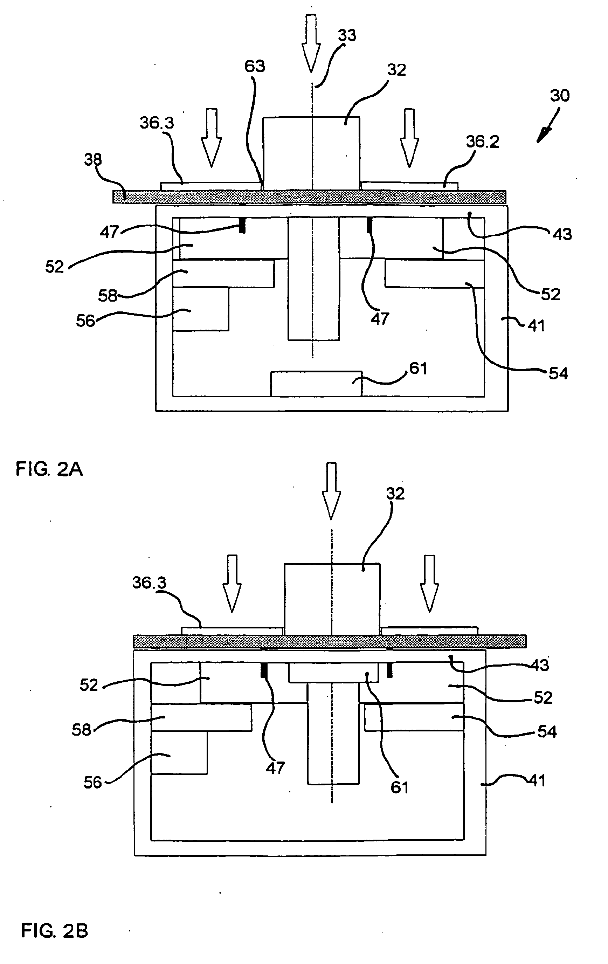

The controller device 30, namely the RP-switch 32, the push switches 36 and the supporting plate 38 are slideable arranged on a frame (will be described with reference to Figs. 2) and may be moved from a first position to a second position and vice versa. The direction of this movement is indicated by arrows 39. The movement of the controller device 30 takes place in a plane perpendicular to the rotation axis 33, that is in a plane parallel to that of the supporting plate 38.

In the present embodiment, the controller device 30 will be hold in the first and the second position, respectively. That is in other words, the controller device 30 will not automatically return in a main position or initial position upon releasing the activation force.

Referring to Figs. 2a and b, the controller device 30 is schematically shown in a sectional side view, wherein same elements as in Fig. 1 are referenced with the same reference numerals.

As already mentioned before, the controller device 30 comprises a frame 41 which serves to support the supporting plate 38 as well as other components necessary for the controller device.

The frame 41 comprises a plate 43 having an opening 45 for receiving portions of the switches 32, 36 extending into the interior space of the frame. The plate 43 is adapted to support and to hold the supporting plate 38 while concurrently allowing a horizontal movement of the supporting plate 38 (that is parallel to the plate 43) in two directions. With respect to Figs. 2a and b, the supporting plate 38 with the switches 32 and 36 may be moved to the left hand side and the right hand side.

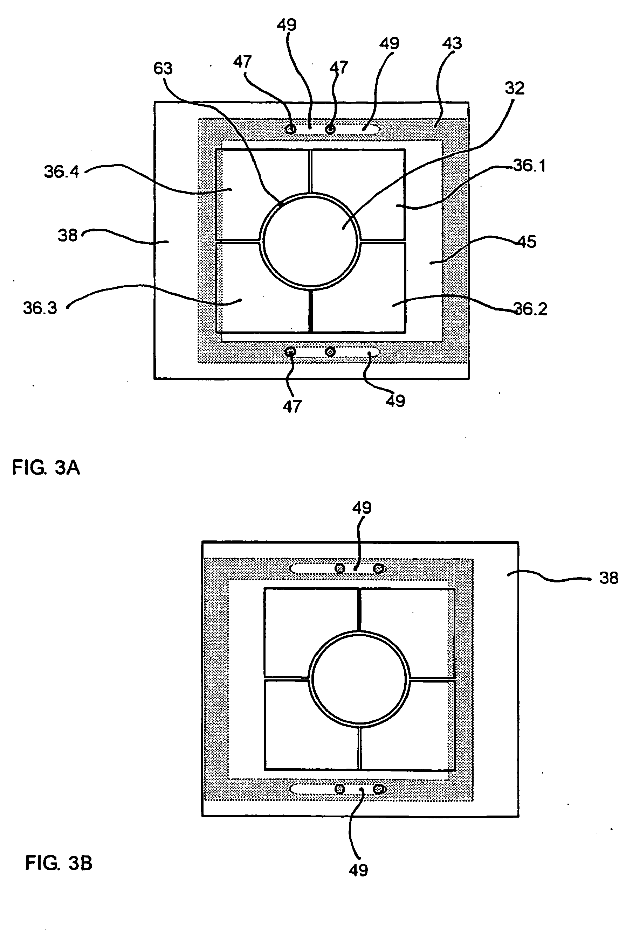

The supporting plate 38 comprises guide pins 47 which are mounted on the downside of the supporting plate 38 and extending through the plate 43. The plate 43 is provided with respective elongated holes for receiving the guide pins 47. As will be seen from Fig. 3a or b, two elongated holes 49 are provided on opposite portions of the plate 43. The elongated holes 49 are adapted not only to guide the guide pins 47 but also to serve as stop means to limit the movement of the supporting plate 38 and hence the switches 32 and 36 in both directions. In Fig. 2a, the supporting plate 38 is shown in its outer left hand side position (first position) and in Fig. 2b in its outer right hand side position (second position).

Within the interior space of the frame 41 some electronic components are housed. For example, the electronic elements for detecting the switching of the RP-switch 32 and the push switches 36 are provided directly below the supporting plate 38 and in contact with the respective switches. These elements are referenced with reference numeral 52. Adjacent the switching electronic elements 52 is a position detection element 54. The position detection element 54 is adapted to detect the movement of the supporting plate 38 and hence the RP-switch 32. Particularly, the position detection element detects the arrival at the first and the second position. In response thereto, the position detection element 54 generates a position detection signal which will be transmitted to the front panel unit 20 of the car multimedia system.

For transmitting control signals not only from the position detection element 54 but also from all switches 32, 36, the controller device 30 comprises a transmitter element 56 which is also provided within the frame 41. The transmitter 56 receives the control signals from the position detection element 54 and the switching electronic element 52 and uses the bluetooth protocol for wirelessly transmitting these control signals. For receiving these control signals, the front panel unit is provided with a respective receiver. Of course it would also be possible to replace the transmitter 56 and the corresponding receiver in the front panel unit with transceiver elements allowing to transmit and receive signals. This would allow a bi-directional communication between the front panel unit 20 and the controller device 30.

The controller device 30 further comprises a locking means 58 which is adapted to releasibly lock the supporting plate 38 with the switches 32, 36 in the first position and the second position, respectively. The locking means 58 operates on a mechanical basis and holds the supporting plate 38 in the first and the second position, respectively, and releases the locking engagement with the supporting plate 38 in response to the application of a predetermined force on the supporting plate 38 or the RP-switch 32 in the direction of the opposite position.

If the controller device 30 is used with a car multimedia system, the locking force has to be selected such that the supporting plate 38 does not leave its position regardless of any acceleration forces or any vibrations caused by the car and acting on the supporting plate 38. The locking means 58 have to ensure that the supporting plate 38 leaves its position only in response to a manual activation by the user.

The controller device 30 further comprises a light source 61 emitting light in the direction of the supporting plate 38. In the present embodiment, the light source 61 is arranged at the bottom of the frame 41. However, it is to be understood that the light source 61 may be provided at any other place within the frame 41 provided that the emission of light in the direction of the supporting plate 38 is achievable. The light emitted by the light source 61 passes through the opening 45 of the frame 41 and gets 63 between the several switches 32, 36. The light source 61 comprises two differently colored light sources, for example a source for red light and a source for green light. Dependent on the position of the supporting plate 38, the light source 61 emits the red light or the green light.

As a result, the user may recognize the position of the supporting plate 38 via the color of the light.

As already mentioned before, Fig. 2b shows the controller device 30 with the supporting plate 38 in the second position.

A further difference to Fig. 2a is the location of the light source 61. In Fig. 2b, the light source 61 is provided directly adjacent the plate 43 and not at the bottom of the frame 41.

In Figs. 3a and b, a top view of the controller device 30 is shown. In Fig. 3a, the supporting plate 38 and the switches 32 and 36 are in the first position, whereas in Fig. 3b the supporting plate 38 is in the second position. As it is apparent from both figures, the guide pins 47 are guided in elongated holes 49 which are provided in the plate 43 of the frame 41. It is also apparent from Figs. 3a, b that the guide pins 47 abut against the left end of the elongated holes 49 in the first position, and abut against the right end of the elongated holes in the second position.

Further, Figs. 3a and b show the gap 63 between the switches 32 and 36, through which light passes from the interior space of the frame to the outside.

As already mentioned with reference to Fig. 1, the controller device 30 is used for controlling a car multimedia system 10, particularly the front panel unit 20. However, it is to be noted that the inventive controller device 30 may also be used for controlling other electronic devices, for example simple car radio devices or even electronic systems beyond the automotive field.

The controller device 30 allows the supporting plate 38 and hence the RP-switch 32 and the four switches 36.1 to 36.4 to be moved from a first position to a second position and vice versa. This movement between the two positions is used to switch between a first switching mode assigned to the first position and a second switching mode assigned to the second position. By employing two switching modes, the RP-switch 32 and the four switches 36 may be used as two separate switching units (as for example the two rotary knobs of rotary-push-button switches on the front panel of prior art car multimedia systems).

That is in other words that the rotary-push-button switch 32 may for example be used for controlling the volume of the audio unit when the first switching mode is activated, and for moving a cursor on the display for selecting menu items when the second switching mode is activated. The user may easily toggle between both switching modes merely by moving the supporting plate 38 from the first to the second position or vice versa.

Just as an example, in the first switching mode (supporting plate in the first position) the RP-switch 32 serves to control the volume (turning left or right) and for switching on and off the system by pushing the switch; the switches 36.1 to 36.4 serve to activate the telephone function, the navigation function, the CD/DVD function and the tuner function, respectively.

In the second switching mode (supporting plate 38 in the second position), the RP-switch 32 for example serves to select menu items by rotating the switch and to activate a selected menu item by pushing the switch 32; and the switches 36.1 to 36.4 serve as back key, CD/DVD eject key, soft key 1 and soft key 2, respectively.

It is to be noted that this assignment of functions to the switches is just one possibility and there are of course other assignments conceivable.

To briefly summarize, the inventive controller device 30 provides means allowing a very easy and ergonomic control of an electronic system, preferably a car multimedia system. The controller unit 30 allows to replace two separate controller units used in the prior art by using the same control unit in two different positions. The user may move the controller unit (supporting plate 38 and the switches 32, 36) from one position to the other with the result of switching between the first switching mode and the second switching mode.

It is also to be noted that the embodiment shown in the figures employs a supporting plate 38 for supporting the RP-switch 32 and the push switches 36. However, a person skilled in the art recognizes that the supporting plate 38 is just optional and not necessary for carrying out the invention. It is only necessary that the rotary-push-button switch 32 and the switches 36 may be moved. Further, the controller device according to the present invention has not to be comprised of the four push switches 36. It would also be possible to provide the controller device 30 only with the rotary-push-button switch 36 without the push switches 36.

Those skilled in the art can now appreciate from the foregoing description that the broad teachings of the present invention can be implemented in a variety of forms. Therefore, while this invention has been described in connection with a particular example thereof, the true scope of the invention should not be so limited since other modifications will become apparent to the skilled practitioner upon a study of the drawings, specification and the claims.

## Claims

1. Controller device for controlling an electronic system, particularly a car multimedia system, comprising
- a rotary-push-button switch, and
- a frame for supporting said switch,
wherein
said rotary-push-button switch (32) is slideably arranged at said frame between a first and a second position, and
a position detecting element (54) for detecting said position of said rotary-push-button switch (32) is provided, wherein dependent on the position said rotary-push-button switch is operated in a first mode or a second mode,
**characterized by**
a supporting plate (38) adapted to support said rotary-push-button switch and to engage with said frame for said sliding movement, and by
four push switches (36) equally arranged around said rotary-push-button switch (32) and supported on said supporting plate (38).

2. Controller device of claim 1, **characterized by** a locking means (58) for releasably holding said rotary-push-button switch (32) in said first and said second position.

3. Controller device of any of the preceding claims, **characterized by** a transmitter (56) for transmitting control signals generated by said switches (32, 36) and/or said position detecting element (54).

4. Controller device of claim 3, **characterized in that** said transmitter comprises a wireless transmitter element (54) for transmitting said signals wireless.

5. Controller device of claim 4, **characterized in that** said wireless transmitter element comprises a Bluetooth element.

6. Controller device of claim 3, **characterized in that** said transmitter element comprises a wire-bound transmitter element for transmitting said signals via wire.

7. Controller device of any of the preceding claims, **characterized in that** said frame (41) comprises at least one, preferably two parallel and elongated holes (49) for guiding and limiting the sliding movement of the rotary-push-button switch between said first and second position.

8. Controller device of any of the preceding claims, **characterized by** a light element (61) assigned to the position detecting element and adapted to signalise the position of said rotary-push-button switch optically, preferably by different coloured light.

9. Car multimedia device, comprising
- a front panel (22) adapted to be placed at the dashboard, and
- a display (24) supported by the front panel,
**characterized by** a controller device according to any of claims 1 through 8.

10. Car multimedia device of claim 9, **characterized in that** said controller device is placed remote of the front panel and the display.

## Patentansprüche

1. Steuerungsvorrichtung zum Steuern eines elektronischen Systems, insbesondere eines Fahrzeugmultimediasystems, umfassend:
- einen Drehdruckknopfschalter, und
- einen Rahmen zum Halten des Schalters,
wobei
der Drehdruckknopfschalter (32) an dem Rahmen zwischen einer ersten und einer zweiten Position verschiebbar angeordnet ist und
ein Positionsdetektionselement (54) zum Detektieren der Position des Drehdruckknopfschalters (32) vorgesehen ist, wobei der Drehdruckknopfschalter in Abhängigkeit von der Position in einem ersten Modus oder einem zweiten Modus betrieben wird,
**gekennzeichnet durch**
eine Halterungsplatte (38), die ausgestaltet ist, um den Drehdruckknopfschalter zu Halten und um für die Schiebebewegung in den Rahmen einzugreifen, und **durch**
vier Druckschalter (36), die gleichmäßig um den Drehdruckknopfschalter (32) angeordnet sind und auf der Halterungsplatte (38) gehalten werden.

2. Steuerungsvorrichtung nach Anspruch 1, **gekennzeichnet durch** ein Feststellmittel (58) zum lösbaren Halten des Drehdruckknopfschalters (32) in der ersten und der zweiten Position.

3. Steuerungsvorrichtung nach einem der vorstehenden Ansprüche, **gekennzeichnet durch** eine Übertragungseinheit (56) zum Übertragen von Steuerungssignalen, die von den Schaltern (32, 36) und/oder dem Positionsdetektionselement (54) erzeugt werden.

4. Steuerungsvorrichtung nach Anspruch 3, **dadurch gekennzeichnet, dass** die Übertragungseinheit ein drahtloses Übertragungselement (54) zum drahtlosen Übertragen der Signale umfasst.

5. Steuerungsvorrichtung nach Anspruch 4, **dadurch gekennzeichnet, dass** das drahtlose Übertragungselement ein Bluetooth Element umfasst.

6. Steuerungsvorrichtung nach Anspruch 3, **dadurch gekennzeichnet, dass** das Übertragungselement ein drahtgebundenes Übertragungselement zum Übertragen der Signale mittels eines Drahtes umfasst.

7. Steuerungsvorrichtung nach einem der vorstehenden Ansprüche, **dadurch gekennzeichnet, dass** der Rahmen (41) mindestens ein, vorzugsweise zwei parallele und gestreckte Löcher (49) zum Führen und Begrenzen der Schiebebewegung des Drehdruckknopfschalters zwischen der ersten und der zweiten Position umfasst.

8. Steuerurigsvorrichtung nach einem der vorstehenden Ansprüche, **gekennzeichnet durch** ein Lichtelement (61), das dem Positionsdetektionselement zugeordnet ist und ausgestaltet ist, um die Position des Drehdruckknopfschalters optisch zu signalisieren, vorzugsweise **durch** verschiedenfarbiges Licht.

9. Fahrzeugmultimediavorrichtung, umfassend:
- eine Frontplatte (22), die ausgestaltet ist, um an dem Armaturenbrett angeordnet zu werden, und
- eine Anzeige (24), die von der Frontplatte gehalten wird,
**gekennzeichnet durch** eine Steuerungsvorrichtung nach einem der Ansprüche 1 bis 8.

10. Fahrzeugmultimediavorrichtung nach Anspruch 9, **dadurch gekennzeichnet, dass** die Steuerungsvorrichtung entfernt von der Frontplatte und der Anzeige angeordnet ist.

## Revendications

1. Dispositif de commande pour commander un système électronique, en particulier un système multimédia pour véhicule automobile, comprenant
- un interrupteur à bouton-poussoir rotatif, et
- un cadre pour supporter ledit interrupteur,
dans lequel
ledit interrupteur à bouton-poussoir rotatif (32) est disposé sur ledit cadre de manière déplaçable entre une première position et une deuxième position, et
on prévoit un élément détecteur de position (54) pour détecter ladite position dudit interrupteur à bouton-poussoir rotatif (32), ledit interrupteur à bouton-poussoir rotatif étant opéré respectivement dans un premier mode ou dans un deuxième mode, en fonction de la position,
**caractérisé par**
une plaque support (38) adaptée à supporter ledit interrupteur à bouton-poussoir rotatif et à s'engager avec ledit cadre pour ledit mouvement de déplacement, et par
quatre interrupteurs à poussoir (36) également disposés autour dudit interrupteur à bouton-poussoir rotatif (32) et supportés sur ladite plaque support (38).

2. Dispositif de commande selon la revendication 1, **caractérisé par** un moyen de verrouillage (58) pour maintenir ledit interrupteur à bouton-poussoir rotatif (32) dans lesdites première et deuxième positions de manière déblocable.

3. Dispositif de commande selon l'une quelconque des revendications précédentes, **caractérisé par** un transmetteur (56) pour transmettre des signaux de commande générés par lesdits interrupteurs (32, 36) et/ou par ledit élément détecteur de position (54).

4. Dispositif de commande selon la revendication 3, **caractérisé en ce que** ledit transmetteur comprend un élément transmetteur sans fil (54) pour une transmission sans fil desdits signaux.

5. Dispositif de commande selon la revendication 4, **caractérisé en ce que** ledit élément transmetteur sans fil comprend un élément Bluetooth.

6. Dispositif de commande selon la revendication 3, **caractérisé en ce que** ledit élément transmetteur comprend un élément transmetteur filaire pour une transmission par fil desdits signaux.

7. Dispositif de commande selon l'une quelconque des revendications précédentes, **caractérisé en ce que** ledit cadre (41) comprend au moins un, de préférence deux, trous parallèles et oblongs (49) pour guider et limiter le mouvement de déplacement de l'interrupteur à bouton-poussoir rotatif entre lesdites première et deuxième positions.

8. Dispositif de commande selon l'une quelconque des revendications précédentes, **caractérisé par** un élément lumineux (61) associé à l'élément détecteur de position et adapté à signaliser optiquement la position dudit interrupteur à bouton-poussoir rotatif, de préférence par une lumière de couleur différente.

9. Dispositif multimédia pour véhicule automobile, comprenant
- un panneau frontal (22) adapté à être placé sur le tableau de bord, et
- un afficheur (24) supporté par le panneau frontal,
**caractérisé par** un dispositif de commande selon l'une quelconque des revendications 1 à 8.

10. Dispositif multimédia pour véhicule automobile selon la revendication 9, **caractérisé en ce que** ledit dispositif de commande est disposé à distance du panneau frontal et de l'afficheur.
